# EUROPÄISCHE PATENTANMELDUNG

(11) **EP 4 768 262 A1**
(43) Veröffentlichungstag der Anmeldung: **01.07.2026**
(21) Anmeldenummer: 25222490.2
(22) Anmeldetag: 11.12.2025
(51) Int. Cl.: B41J 3/407, B23K 26/70, B23K 26/362, B41J 2/44

(54) **VORRICHTUNG UND VERFAHREN ZUM MARKIEREN VON OBJEKTEN MITTELS LASERN**

(30) Priorität: 12.12.2024 DE 102024137326
(71) Anmelder: Krones AG, 93073 Neutraubling (DE)
(72) Erfinder: Bauer, Johannes, 93073 Neutraubling (DE); Urban, Ralf, 93073 Neutraubling (DE)
(74) Vertreter: Hannke Bittner & Partner mbB Regensburg

(57) **Zusammenfassung**

Vorrichtung (1) zum Markieren von Objekten (10) und insbesondere von Behältnissen, Behältnisverschlüssen oder Etiketten (10) mit einer Transporteinrichtung (2), welche die Objekte (10) entlang eines vorgegebenen Transportpfads (P) transportiert und mit einer Markierungseinrichtung (4) welche dazu geeignet und bestimmt ist, die Objekte (10) mit einer Markierung zu versehen, wobei die Markierungseinrichtung (4) eine Lasererzeugungseinheit (42) zur Erzeugung eines Laserbündels aufweist sowie ein Austrittselement (44), über welches das Laserbündel aus der Markierungseinrichtung austritt, dadurch gekennzeichnet, dass die Vorrichtung eine Inspektionseinrichtung aufweist, welche dazu geeignet und bestimmt ist, das Austrittselement (44) zu inspizieren.

## Beschreibung

Die vorliegende Erfindung bezieht sich auf eine Vorrichtung und ein Verfahren zum Markieren von Objekten und insbesondere von Behältnissen. Aus dem Stand der Technik sind unterschiedlichste Vorgehensweisen zur Markierung von Behältnissen bekannt. So ist es bekannt, Behältnisse mit Etiketten oder mit Drucken zu versehen.

Viele dieser Vorgehensweisen haben jedoch den Nachteil, dass sie mit einem erhöhten Aufwand bei der Entsorgung oder Wiederverwertung der Behältnisse einhergehen.

In jüngerer Zeit sind daher auch Vorrichtungen und Verfahren bekannt geworden, bei denen Laser eingesetzt werden, um die Objekte und insbesondere Behältnisse zu markieren. So ist es bekannt, dass Laser Markierungen in die Wand der Behältnisse eingravieren.

Diese Laser haben dabei oft aufwendige und teure Optiken, wie bewegliche Spiegel, welche die Bewegung des austretenden Laserbündels bewirken. Diese Optiken sind dabei üblicherweise gut geschützt vor Umwelteinflüssen in einem Gehäuse angeordnet.

Aus der DE 10 2011 056 436 A1 ist eine Vorrichtung zum Behandeln von Getränkebehältnissen bekannt, welche eine Markierungseinrichtung zum Markieren der Behältnisse aufweist.

Die DE 10 2020 123 479 A1 beschreibt ein Verfahren zur Zustandsüberwachung eines Laserbearbeitungskopfes.

Aus der DE 10 2017 101 223 A1 ist eine Maschinenlernvorrichtung zum Lernen von Bedingungen zum Starten von Laservorrichtungen bekannt.

Die DE 101 13 518 A1 beschreibt ein Verfahren zur Messung des Verschmutzungsgrads eines Schutzglases eines Laserbearbeitungskopfes.

Aus der DE 10 2007 003 023 B4 ist ein Optoelektronischer Sensor und ein Verfahren zum Lichtdurchlässigkeitstest einer Schutzscheibe bekannt.

Weiterhin ist jedoch bei derartigen Markierungseinrichtungen auch ein Austrittselement wie etwa eine Austrittslinse vorgesehen, durch welches hindurch das Laserbündel (oftmals auch als Laserstrahl bezeichnet) austritt.

Zumindest die Außenseite dieses Austrittselements ist dabei verstärkt Umwelteinflüssen ausgesetzt. Generell sind bei Lasermarkierungseinrichtungen am Austrittsort des Laserbündels vergleichbar mit Kameras Linsen angebracht. Diese lassen den Strahl bzw. das Laserbündel gerichtet auf das zu markierende Objekt und/oder Substrat auftreffen. Dabei sind diese Linsen Teil eines komplexen optischen Systems, welches mehrere Spiegelumlenkungen aufweist. Teilweise sind diese Spiegel durch Motore wie etwa Galvomotore oder andere Antriebselemente angetrieben.

Diese Austrittselemente bzw. Linsen müssen sehr sauber und unbeschädigt sein, um eine hochpräzise Lasermarkierung zu ermöglichen. Verschmutzte oder beschädigte Austrittselemente und insbesondere Linsen bei Lasermarkierungseinrichtungen können zu Markierungen führen, welche nicht mehr den Qualitätsvorgaben entsprechen. Dies wiederum kann zu Reklamationen durch Kunden führen oder auch zu einer nicht mehr gewährleisteten Auslesbarkeit der jeweiligen Markierung. Falls die Markierung geprüft wird, kann diese Prüfung auch dazu führen, dass das entsprechende Objekt als Ausschuss behandelt und ausgeschleust wird.

Besonders bevorzugt handelt es sich bei der durch die Markierungseinrichtung auf den Objekten und insbesondere Behältnissen aufgebrachte Markierung um eine maschinenlesbare Markierung oder für Menschen lesbare Schriftzeichen in einer beliebigen Sprache. Besonders bevorzugt handelt es sich bei den zu markierenden Objekten um Objekte aus Kunststoff und insbesondere Behältnisse aus Kunststoff und insbesondere Kunststoffflaschen, aus z.B: Polyethylenterephthalat.

Der vorliegenden Erfindung liegt daher die Aufgabe zugrunde, die Zuverlässigkeit des Markierungsvorgangs und auch die Qualität der Markierung zu verbessern.

Diese Aufgaben werden durch die Gegenstände der unabhängigen Patentansprüche erreicht. Vorteilhafte Ausführungen und Weiterbildungen sind Gegenstand der Unteransprüche.

Eine erfindungsgemäße Vorrichtung zum Markieren von Objekten und insbesondere von Behältnissen und insbesondere von Kunststoffbehältnissen weist eine Transporteinrichtung auf, welche die Objekte entlang eines vorgegebenen Transportpfads transportiert und eine Markierungseinrichtung welche dazu geeignet und bestimmt ist, die Objekte mit einer Markierung zu versehen, wobei die Markierungseinrichtung eine Lasererzeugungseinheit zur Erzeugung eines Laserbündels aufweist sowie ein Austrittselement, über welches das Laserbündel aus der Markierungseinrichtung austritt,

Erfindungsgemäß weist die Vorrichtung eine Inspektionseinrichtung auf, welche dazu geeignet und bestimmt ist, das Austrittselement zu inspizieren.

Es wird daher im Rahmen der Erfindung vorgeschlagen, dasjenige Element, welches in besonderer Weise anfällig für Verschmutzungen ist, zu inspizieren und insbesondere zu überwachen. Bevorzugt wird wenigstens eine Oberfläche des Austrittselements inspiziert. Bevorzugt wird eine Oberfläche des Austrittselements inspiziert, welche in Kontakt mit einer Umgebung der Markierungseinrichtung kommt. Es wäre jedoch auch denkbar, einen inneren Bereich des Austrittselements, beispielsweise einen Linsenkörper zu inspizieren. Dieser kann beispielsweise Beschädigungen wie Lufteinschlüsse oder Risse aufweisen und daher die Lasermarkierung verfälschen.

Besonders bevorzugt handelt es sich bei den Objekten um Behältnisse und insbesondere um blasgeformte Behältnisse und insbesondere um streckblasgeformte Behältnisse. Besonders bevorzugt bestehen die Behältnisse aus Kunststoff und insbesondere aus PET.

Besonders bevorzugt weisen die Behältnisse einen vorgegebenen Rezyklatanteil auf und insbesondere einen Rezyklatanteil, der höher liegt als 60%, und bevorzugt höher als 80%, bzw. maximal bis zu 100 % Die Behältnisse können aber auch aus neuen "Virgin Kunststoff" gefertigt sein.

Bei einer bevorzugten Ausführungsform ist die Transporteinrichtung dazu geeignet und bestimmt, die Behälter und/oder Kunststoffvorformlinge vereinzelt zu transportieren. Bevorzugt transportiert die Transporteinrichtung die Kunststoffbehältnisse entlang eines kreisförmigen Pfads. So kann die Transporteinrichtung einen drehbaren Träger bzw. Teller aufweisen auf dem ein Behältnis angeordnet ist. Dabei sind die Behältnisse zwischen dem Teller und einer Zentriervorrichtung auf der Oberseite eingespannt. Die Teller werden bevorzugt durch elektronische Motore, insbesondere Servomotore gedreht.

Bei einer weiteren bevorzugten Ausführungsform weist die Vorrichtung mehrere Markierungseinrichtungen zum Markieren der Kunststoffbehältnisse auf. Bevorzugt handelt es sich bei diesen Markierungseinrichtungen jeweils um Markierungseinrichtungen, welche eine Lasererzeugungseinrichtung aufweisen,

Bevorzugt sind diese Markierungseinrichtungen wenigstens teilweise und bevorzugt alle miteinander synchronisiert. Bevorzugt sind diese Markierungseinrichtungen entlang des Transportpfads der Behältnisse hintereinander angeordnet.

Bei einer weiteren vorteilhaften Ausführungsform handelt es sich bei der Transporteinrichtung um ein -insbesondere einbahniges - Transportband, beispielsweise, wenn die Objekte planare Oberflächen aufweisen, wie etwa Behältnisverschlüsse oder Formflaschen mit dreieckigen, rechteckigen oder ovalen Querschnitt.

Weiterhin kann die Transporteinrichtung auch eine linearmotorische Führung aufweisen.

Bevorzugt ist die Markierungseinrichtung stationär angeordnet und markiert bevorzugt die an dieser Markierungseinrichtung vorbeitransportierten Behältnisse.

Bevorzugt ist die Transporteinrichtung dazu geeignet und bestimmt, die Behältnisse mit einer Geschwindigkeit zu transportieren, welche zwischen 10.000 und 150.000 B/h liegt, bevorzugt zwischen 20.000 und 140000 B/h und besonders bevorzugt zwischen 30.000 und 130.000B/h.

Bei einer weiteren vorteilhaften Ausführungsform weist die Vorrichtung eine Kontrolleinrichtung oder weitere Inspektionseinrichtung auf, welche dazu geeignet und bestimmt ist, die an den Behältnissen angeordnete Markierung zu inspizieren. Bevorzugt ist diese Kontrolleinrichtung entlang des Transportpfads der Behältnisse nach der Markierungseinrichtung angeordnet. Bevorzugt weist diese Kontrolleinrichtung eine Bildaufnahmeeinrichtung welche wenigstens ein Bild jedes mit einer Markierung versehenen Objekts und insbesondere Behältnisses aufnimmt.

Bevorzugt ist die Markierungseinrichtung dazu geeignet und bestimmt, die Markierung auf einem Grundkörper oder an einem Halsbereich des Behältnisses anzuordnen. Bevorzugt weist die Lasereinrichtung eine Intensität und/oder Leistung auf, welche es ermöglicht, die Markierung in einen Kunststoff des Behältnisses zu gravieren.

Daneben kann es sich bei den zu markierenden Objekten jedoch auch um Behältnisse aus Pulpe oder Papier handeln. Weiterhin kann es sich bei den Objekten um Verschlüsse und insbesondere Behältnisverschlüsse und insbesondere um Behältnisverschlüsse aus Kunststoff handeln.

Weiterhin kann es sich bei den Objekten um Dosen, insbesondere aus einem Metall wie Aluminium oder Stahl handeln.

Weiterhin kann es sich bei den Objekte um Etiketten handeln und insbesondere um Etiketten, welche an Behältnissen angebracht sind. Diese Etiketten können dabei aus Papier oder Kunststoff bestehen oder diese Materialien aufweisen.

Bei einer weiteren vorteilhaften Ausführungsform weist die Lasermarkierungseinrichtung und/oder der Laser eine Leistung auf, welche größer ist als 1W, bevorzugt größer als 2W, bevorzugt größer als 5W, bevorzugt größer als 10W, bevorzugt größer als 20W und bevorzugt größer als 40W.

Bei einer weiteren vorteilhaften Ausführungsform weist die Lasermarkierungseinrichtung und/oder der Laser eine Leistung auf, welche kleiner ist als 500W, bevorzugt kleiner als 400W, bevorzugt kleiner als 300W, bevorzugt kleiner als 250W, bevorzugt kleiner als 200W und besonders bevorzugt kleiner als 150W.

Bei einer weiteren vorteilhaften Ausführungsform weist die Vorrichtung eine Auswurfeinrichtung auf, welche dazu geeignet und bestimmt ist einzelne Objekte und insbesondere Behältnisse in Reaktion auf ein Ergebnis der Kontrolleinrichtung auszuwerfen.

Bei einer weiteren bevorzugten Ausführungsform weist die Markierungseinrichtung eine Bewegungseinrichtung auf, welche dazu geeignet und bestimmt ist, das austretende Laserbündel (bzw. den austretenden Laserstrahl) in einer Ebene zu bewegen, die senkrecht zu der optischen Strahlrichtung des Laserbündes steht. Auf diese Weise können auch etwas komplexere Markierungen an dem Behältnis angeordnet werden.

Bei einer weiteren bevorzugten Ausführungsform weist die Vorrichtung eine Dreheinrichtung, welche das Objekt und insbesondere das Behältnis oder einen Behältnisverschluss - insbesondere während des Markierungsvorgangs um dessen Längsachse dreht.

Bei einer weiteren bevorzugten Ausführungsform weist die Vorrichtung eine Kühleinrichtung zur Kühlung des markierten Bereichs des Objekts und insbesondere Behältnisses auf.

Bei einer weiteren bevorzugten Ausführungsform weist die Markierungseinrichtung eine Umlenkeinrichtung zum Umlenken des Laserbündels auf. Diese Umlenkeinrichtung kann bevorzugt eine im Inneren der Markierungseinrichtung bzw. Lasereinrichtung angeordnete Anordnung aus einem oder mehreren Spiegeln aufweisen, wobei bevorzugt eine Position und/oder eine Stellung wenigstens eines dieser Spiegelelemente veränderbar ist.

Hierzu können im inneren eines Gehäuses Antriebe vorgesehen sein, es können beispielsweise Galvomotore vorgesehen sein. Bevorzugt weist die Markierungseinrichtung einen Galvo-Laser bzw. ein Galvo-Lasersystem auf.

Bevorzugt weist das Galvo-Lasersystem einen oder mehrere kleine Motoren auf, welche die Spiegel des Lasersystems antreiben. Diese Spiegel spielen eine zentrale Rolle bei der Ausrichtung des Laserstrahls.

Bevorzugt werden zwei oder mehr und besonders bevorzugt genau zwei Spiegel verwendet. Jeder Spiegel wird bevorzugt von einem eigenen Galvanometerscanner gesteuert. Ein Spiegel passt dabei bevorzugt die X-Achsenbewegung des Laserstrahls an, der andere die Y-Achsenbewegung.

Die bevorzugt verwendeten Motoren sorgen für die schnelle und präzise Einstellung der Spiegel, was für die schnelle Neupositionierung des Laserstrahls über das zu markierende Objekt vorteilhaft ist.

Es können auch andere Elemente optische Elemente in der Markierungseinrichtung vorgesehen sein wie etwa optische Gitter, Spiegel, Prismen, Blenden, Linsen und dergleichen.

Bei einer weiteren bevorzugen Ausführungsform ist die Inspektionseinrichtung dazu geeignet und bestimmt, eine Anomalie des Austrittselements zu erfassen. Unter einer Anomalie wird insbesondere eine Abweichung von einem Sollzustand des Austrittselements verstanden, wobei die nachfolgenden Beispiele angegeben werden.

Besonders bevorzugt ist die Anomalie aus einer Gruppe von Anomalien ausgewählt, welche Verschmutzungen des Austrittselements, Beschädigungen und Fehler des Austrittselements, Beschädigungen oder Verschmutzungen an der Oberfläche des Austrittselements oder auch Beschädigungen im Inneren des Austrittselements enthält. Weiterhin könnte es sich bei der Anomalie oder Beschädigung um eine Fehlstellung des Austrittselements handeln wie etwa eine ungewollten Schräglage einer Linse.

Bei den Verschmutzungen kann es sich beispielsweise um Schmutz, Staub, Partikel, Abrieb oder Scherben aber um auch Wassertropfen oder Kondensat auf einer Oberfläche des Austrittselements handeln. Bei den Beschädigungen kann es sich beispielsweise um Kratzer, Risse oder andere Störungen handeln.

Bei einer weiteren bevorzugten Ausführungsform ist die Inspektionseinrichtung dazu geeignet und bestimmt, die Anomalie des Austrittselements berührungslos zu erfassen. So kann beispielsweise eine Oberfläche des Austrittselements mit einer Kamera überwacht werden oder es können berührungslose Temperatursensoren oder optoelektronische Elemente vorgesehen sein, welche eine Temperatur des Austrittselements beispielsweise auch eine lokale erhöhte Temperatur erfassen. So können beispielsweise Verschmutzungen zu einer lokal erhöhten Temperatur führen.

Bei einer bevorzugten Ausführungsform weist die Inspektionseinrichtung eine Beleuchtungseinrichtung auf, welche eine Oberfläche des Austrittselements beleuchtet und insbesondere zur Durchführung der Inspektion beleuchtet. Diese Beleuchtungseinrichtung kann beispielsweise die Oberfläche mit sichtbarem Licht, IR oder auch UV - Licht beleuchten, um bestimmte Fehler sichtbar zu machen.

Bei einer weiteren bevorzugten Ausführungsform ermöglicht die Markierungseinrichtung einen Inspektionsmodus, welcher der Inspektion des Austrittselements dient. So kann beispielsweise in einem solchen Inspektionsmodus die Austrittsfläche des Austrittselements von dem Laser abgescannt werden und dabei können eventuelle Fehler erfasst werden.

Bei einer weiteren bevorzugten Ausführungsform ist die Inspektionseinrichtung dazu geeignet und bestimmt, wenigstens ein Signal auszugeben, welches für die Anomalie des Austrittselements und/oder das Auftreten einer Anomalie charakteristisch ist. So kann beispielsweise eine Fehlermeldung ausgegeben werden oder auch der Hinweis, dass eine Reinigung des Austrittselements durchgeführt werden sollte.

Bei einer weiteren bevorzugten Ausführungsform weist die Inspektionseinrichtung wenigstens eine Bildaufnahmeeinrichtung auf, welche dazu geeignet und bestimmt ist, wenigstens ein Bild wenigstens eines Abschnitts des Austrittselements aufzunehmen.

Anhand dieses Bildes kann, wie unten genauer erörtert, beispielsweise auf die Natur der Anomalie geschlossen werden.

Bei einer weiteren bevorzugten Ausführungsform weist die Vorrichtung eine Auswerteeinrichtung auf, welche dazu geeignet und bestimmt ist, von der Inspektionseinrichtung aufgenommene Messdaten und/oder Bilder, welche für das Austrittselement und/oder die Anomalie charakteristisch sind auszuwerten und wenigstens einen Wert auszugeben, welcher für ein Ergebnis dieser Auswertung charakteristisch ist.

So kann beispielsweise eine Information darüber ausgegeben werden, welche Art einer Anomalie, etwa eine Verschmutzung, ein Wassertropfen oder eine Beschädigung vorliegt. Daneben kann auch angegeben werden in welchem Bereich des Austrittselements diese Anomalie vorliegt.

Daneben können auch Hinweise zur Beseitigung der Anomalie ausgegeben werden.

Bei einer weiteren vorteilhaften Ausführungsform ist die Auswerteeinrichtung dazu geeignet und bestimmt, die Auswertung unter Verwendung einer künstlichen Intelligenz (KI) durchzuführen.

Genauer gesagt wird zur Auswertung ein Bildauswertungs - Modell maschinellen Lernens zugrunde gelegt.

Bevorzugt basiert das Bildauswertungs-Modell maschinellen Lernens auf einem (künstlichen) neuronalen Netzwerk. Bevorzugt ist das neuronale Netzwerk als tiefes neuronales Netzwerk (Deep Neural Network, DNN), bei dem die parametrierbare Verarbeitungskette eine Mehrzahl von Verarbeitungsschichten aufweist, und/oder ein sogenanntes Convolutional Neural Network (CNN) (dt. Faltungsnetzwerk) und/oder ein rekurrentes Neuronales Netzwerk (RNN, engl. Recurrent Neural Network) ausgebildet.

Bevorzugt werden dem Bildauswertungs-Modell bzw. dem (künstlichen) neuronalen Netzwerk die (zu verarbeitenden) Daten, insbesondere die ortsaufgelösten Bilder (oder hiervon abgeleitete Daten), als Eingangsgrößen zugeführt. Bevorzugt bildet das Bildauswertungs-Modell bzw. das künstliche neuronale Netzwerk die Eingangsgrößen in Abhängigkeit einer parametrierbaren Verarbeitungskette auf Ausgangsgrößen ab, wobei als Ausgangsgröße bevorzugt die Gattung von Anomalien des Austrittselements, die Gattung von Verschmutzungen, der Ort und/oder die Gattung von Schäden an oder in dem Austrittselement, die Größe von Schäden und/oder Verschmutzungen gewählt sind.

Bevorzugt wird/wurde das Bildauswertungs-Modells maschinellen Lernens unter Verwendung vorgegebener Trainingsdaten trainiert, wobei bevorzugt durch das Training eine bzw. die parametrierbare Verarbeitungskette parametriert wird.

Bei einem bevorzugten Verfahren werden in dem Trainingsprozess des Bildauswertungs-Modells Trainingsdaten verwendet, welche eine von der wenigstens einen Bildaufahmeeinrichtung (oder einer anderen Bilderfassungseinrichtung erfasste Vielzahl von ortsaufgelösten Bildern) (insbesondere von unterschiedlichen Austrittselementen) umfassen. Dies bietet den Vorteil, dass bereits der Trainingsprozess spezifisch auf die verwendete und/oder zu verwendende Inspektionsvorrichtung abgestimmt wird und beispielsweise damit spezifische Gegebenheiten der spezifischen Inspektionsvorrichtung, wie optische Eigenschaften der Bildaufnahmeeinrrichtung oder auch spezifische Lichtverhältnisse in der Inspektionsvorrichtung, unmittelbar berücksichtigt werden können.

Bevorzugt werden die zur Verwendung als Trainingsdaten vorgesehenen (von der wenigstens einen Bildaufnahmeeinrichtung aufgenommenen) ortsaufgelösten Bilder mit Anomalien-Sorten- und/oder Klassifikationsmerkmalen versehen.

Bevorzugt werden die ortsaufgelösten Bilder zusammen mit den jeweils ihnen zugeordneten Anomalien-Sorten- und/oder Schadenssorten (z.B. Kratzer, Brüche, Lufteinschlüsse etc) und/oder Verschmutzungssorten (Art der Verschmutzung, beispielweise Staub, Wassertropfen oder andere Verschmutzungen) und/oder Klassifikationsmerkmalen als Trainingsdatensatz (insbesondere auf einer flüchtigen und/oder der nicht-flüchtigen Speichereinrichtung) abgelegt und/oder verwendet. Bevorzugt wird auf diese Weise eine Vielzahl von Trainings-Datensätzen erzeugt.

Bei den Klassifikationsmerkmalen kann es sich dabei bevorzugt um die Größe einer Verschmutzung (eine geometrische Ausdehnung), eine geometrische Gestalt einer Verschmutzung, eine Farbe einer Verschmutzung, eine Transparenz einer Verschmutzung, einen Brechungsindex einer Verschmutzung, eine Größe eines Schadens, eine Position eines Schadens (z.B. an der Oberfläche oder im Inneren des Austrittselements), einen Brechungsindex eines Schadens, eine Art eines Schadens (z.B. Kratzer oder Bruch) und dergleichen handeln.

Durch die Verwendung eines Bildauswertungs-Modells maschinellen Lernens wird erreicht, dass eine für die Datenverarbeitung optimale (komplexe) Kombination verschiedener Merkmale und/oder Referenzbereiche (in dem Trainingsprozess) sowie in verschiedenste unterschiedliche Verschmutzungssorten und/oder Schadenssorten oder allgemein Anomalien-Sorten angepasste Merkmale (bzw. Merkmalskombinationen) identifiziert bzw. ermittelt wird.

Dies bietet den Vorteil, dass sodann bei Auswertung des wenigstens einen ortsaufgelösten Bildes mittels des trainierten Bildauswertungs-Modells mit hoher Präzision die Gattung der Anomalie, die Position einer Anomalie, die Gattung einer Verschmutzung, und/oder die Gattung eines Schadens ermittelt werden kann.

So können etwa aufgenommene Bilder unter Verwendung dieser künstlichen Intelligenz ausgewertet werden.

Bei einer weiteren bevorzugten Ausführungsform ist die Lasererzeugungseinheit aus einer Gruppe von Lasererzeugungseinheiten ausgewählt welche CO2 Laser, Nd:Yag Laser, Faser laser, UV Laser, grüner Laser oder Ulrapulse Laser oder eine Kombination aus diesenenthält.

Bevorzugt gibt die Lasererzeugungseinheit Laserlicht im sichtbaren Wellenlängenbereich aus, es wären jedoch auch andere Wellenlängenbereiche denkbar, wie insbesondere aber nicht ausschließlich Wellenlängen im ultravioletten Bereich oder Wellenlängen im nahinfraroten Bereich. Bevorzugt handelt es sich bei dem Laser um einen Dauerstrich (cw) Laser, es wäre jedoch auch ein gepulster Laser denkbar, etwa ein Laser der Pulse im nano- pico- oder femtosekundenbereich ausgibt.

Bei einer weiteren bevorzugten Ausführungsform ist das Austrittselement aus einer Gruppe von Austrittselementen ausgewählt, welche Linsen, Austrittsfenster, Spiegel und Prismen enthält.

Bei einer weiteren bevorzugten Ausführungsform weist die Vorrichtung eine Maßnahmenauslöseeinrichtung auf, welche in Reaktion auf die Feststellung einer Anomalie des Austrittselements ein Maßnahme auslöst und insbesondere eine Maßnahme, welche diese Anomalie beseitigt oder eine Gegenreaktion auf diese Anomalie darstellt.

Bevorzugt ist diese Maßnahme aus einer Gruppe von Maßnahmen ausgewählt, welche die Aufforderung an einen Nutzer zum Reinigen des Austrittselements, eine automatisierte Reinigung des Austrittselements, die Aufforderung an einen Nutzer zum Wechseln des Austrittselements, einen automatisierten Wechsel des Austrittselements, die Ausgabe eines Warnhinweises an den Benutzer, die Anweisung zum Ändern wenigstens eines Parameters der Markierungseinheit, die Änderung wenigstens eines Parameters der Markierungseinheit und dergleichen enthält.

So kann beispielsweise automatisiert ein Reinigungsvorgang ausgelöst werden. Dabei ist es auch möglich, dass der Reinigungsvorgang in Abhängigkeit von der Art der Verschmutzung ausgelöst wird. Falls etwa festgestellt wird, dass es sich bei der Anomalie um eine Verschmutzung in Form von z.B. Staub handelt, kann es sich bei dem ausgelösten Reinigungsvorgang um einen Abblasvorgang handeln, bei dem eine Oberfläche des Austrittselements mit Luft abgeblasen wird.

Falls es sich bei der Anomalie um einen an dem Austrittselement haftenden Fremdkörper handelt, kann es sich bei der Gegenmaßnahme um ein Reinigen des Austrittselements mit einer Reinigungsflüssigkeit handeln.

Falls eine hartnäckigere Verschmutzung festgestellt wird, kann ein Reinigen mit einem Reinigungselement etwa einem Bürstenelement veranlasst werden.

Falls Schäden festgestellt werden, kann etwa der Benutzer zum Ersetzen des Austrittselements aufgefordert werden. Wie erwähnt, kann auch ein selbsttätiges Ersetzen des Austrittselements erfolgen.

Es wäre jedoch auch eine Anpassung der Lasereinheit selbst denkbar. So könnte etwa der Austrittspunkt des Laserbündels auf dem Austrittselement verändert werden, etwa um den Ort eines Schadens zu umgehen.

Daneben könnte auch die Leistung des Lasers geändert werden, auch kann evtl. geringfügig der Austrittsbereich geändert werden oder es kann das Austrittselement verschoben werden.

Bei einer weiteren bevorzugten Ausführungsform weist die Vorrichtung eine Reinigungseinrichtung zum automatischen Reinigen des Austrittselements auf. So kann beispielsweise eine Reinigungseinrichtung in Reaktion auf eine festgestellte Anomalie die Oberfläche des Austrittselement reinigen, wobei auch dieser Reinigungsvorgang auf die Art der Anomalie angepasst sein kann.

Bei einer weiteren bevorzugten Ausführungsform weist die Vorrichtung eine Wechseleinrichtung zum automatischen Wechseln des Austrittselements auf. Bevorzugt führt diese Wechseleinrichtung in Reaktion auf bestimmte Anomalien wie etwa Schäden des Austrittselements einen Wechsel desselben durch.

Bei einer weiteren vorteilhaften Ausführungsform weist die Markierungseinrichtung ein Gehäuse auf, in welcher die Lasererzeugungseinheit angeordnet ist und an der das Austrittselement angeordnet ist. Die Lasererzeugungseinheit weist in der Regel sehr sensible optische Komponenten auf. Diese sind bevorzugt vollständig von dem Gehäuse eingehaust.

Bevorzugt weist die Markierungseinrichtung eine Bündellenkeinrichtung auf, welche das erzeugte Laserbündel lenkt und/oder die Austrittsposition in einer Ebene, welche senkrecht zu dem optischen Pfad des Laserbündes steht, bewegen kann, insbesondere um auf diese Weise die Markierung zu erzeugen.

Wie erwähnt, kann diese Bündellenkeinrichtung einen oder mehrere Spiegel aufweisen, welche bevorzugt durch eine Antriebseinrichtung bewegbar sind. Bevorzugt ist auch diese Bündellenkeinrichtung im Inneren des genannten Gehäuses angeordnet.

Bei einer weiteren bevorzugten Ausführungsform weist die Inspektionseinrichtung wenigstens eine in diesem Gehäuse angeordnete Sensoreinrichtung aufweist, welche besonders bevorzugt dazu geeignet und bestimmt ist, wenigstens einen für das Austrittselement charakteristischen Parameter zu erfassen.

Bevorzugt wird das Strahlenbündel auf dem Austrittselement anhand entstehenden (Rest-) Reflektion analysiert.

Bei einer weiteren bevorzugten Ausführungsform weist die Inspektionseinrichtung wenigstens eine außerhalb des Gehäuses angeordnete Bildaufnahmeeinrichtung auf. Bevorzugt inspiziert diese Inspektionseinrichtung das Austrittselement. Bevorzugt weist die Inspektionseinrichtung eine Beleuchtungseinrichtung zum Beleuchten des Austrittselements auf. So kann etwa eine Ringbeleuchtung vorgesehen sein, welche das Austrittselement beleuchtet.

Besonders bevorzugt findet die Beleuchtung und Kontrolle des Austrittselements zwischen den Beschriftungsvorgängen statt.

Bei einer weiteren bevorzugten Ausführungsform weist die Vorrichtung einen Regelkreis zur Beseitigung von Anomalien des Austrittselements auf. So kann die Inspektionseinrichtung eine Anomalie erfassen und entsprechend ein Signal an eine Reinigungseinrichtung zum Reinigen des Austrittselements ausgeben. Nach erfolgtem Reinigungsvorgang kann die Inspektionseinrichtung abermals das Austrittselement inspizieren und ggfs. einen weiteren Reinigungsvorgang einleiten.

Die vorliegende Erfindung ist weiterhin auf eine Markierungseinrichtung zum Markieren von Objekten und insbesondere von Behältnissen, Behältnisverschlüssen oder Etiketten gerichtet mit einem Gehäuse und einer innerhalb des Gehäuses angeordneten Lasererzeugungseinheit sowie einem Austrittselement über welches ein von der Lasererzeugungseinheit erzeugtes Laserbündel aus der Markierungseinrichtung austritt.

Erfindungsgemäß ist eine Inspektionseinrichtung vorgesehen, welche dazu geeignet und bestimmt ist, das Austrittselement zu inspizieren.

Bevorzugt bildet das Austrittselement den einzigen Bereich der Markierungseinrichtung aus, über den Laserstrahlung bzw. Laserlicht aus der Markierungseinrichtung und insbesondere einem Gehäuse der Markierungseinrichtung austreten kann

Die vorliegende Erfindung ist weiterhin auf ein Verfahren zum Markieren von Objekten und insbesondere von Behältnissen gerichtet, wobei eine Transporteinrichtung die Objekte entlang eines vorgegebenen Transportpfads transportiert und eine Markierungseinrichtung die Objekte mit einer Markierung (und insbesondere mit einer optisch wahrnehmbaren Markierung) versieht, wobei die Markierungseinrichtung eine Lasererzeugungseinheit aufweist, welche ein Laserbündel erzeugt sowie ein Austrittselement, über welches das Laserbündel aus der Markierungseinrichtung austritt.

Erfindungsgemäß weist die Vorrichtung eine Inspektionseinrichtung auf, welche das Austrittselement wenigstens zeitweise inspiziert. Es wird daher auch verfahrensseitig vorgeschlagen, dass das Austrittselement inspiziert wird und ggfs. Anomalien dieses Austrittselements erfasst werden.

Bevorzugt erfasst die Inspektionseinrichtung wenigstens eine Anomalie des Austrittselements. Besonders bevorzugt gibt die Inspektionseinrichtung wenigstens ein Signal und/oder einen Messwert aus, der für diese Anomalie charakteristisch ist.

Weitere Vorteile und Ausführungsformen ergeben sich aus den beigefügten Figuren:

Darin zeigt:

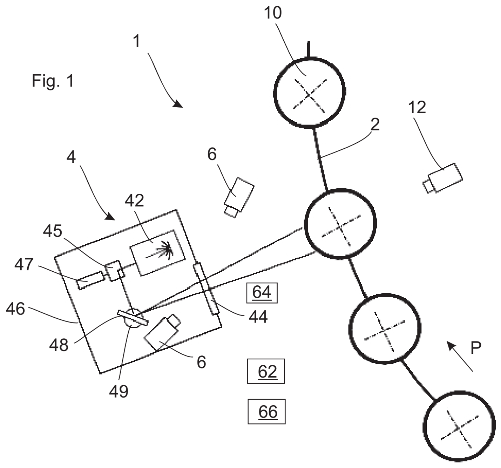

- Fig. 1: eine schematische Darstellung einer erfindungsgemäßen Vorrichtung.

Fig. 1 zeigt eine schematische Darstellung einer erfindungsgemäßen Vorrichtung 1 zum Markieren von Objekten, genauer hier von Behältnissen 10.

Diese Vorrichtung weist eine (nur schematisch dargestellte) Transporteinrichtung 2 auf, wie hier etwa ein Trägerrad, welches eine Vielzahl von Behältnissen 10 entlang eines hier kreisförmigen Transportpfads P transportiert. Bei der Transporteinrichtung könnte es sich jedoch auch um eine Transporteinrichtung handeln, welche Behältnisverschlüsse transportiert.

Dabei ist es möglich, dass auch die Behältnisse 10 selbst bezüglich ihrer Längsrichtung, welche hier senkrecht zur Figurenebene verläuft, drehbar sind und/oder von Elementen der Transporteinrichtung um ihre Längsrichtung gedreht werden.

Das Bezugszeichen 4 kennzeichnet eine Markierungseinrichtung, genauer eine Lasermarkierungseinrichtung und insbesondere eine Lasergravierungseinrichtung, welche die Behältnisse 10 jeweils mit einer Markierung versieht. Dabei ist es möglich, dass an allen Behältnissen 10 die gleiche Markierung angebracht wird, es wäre jedoch auch möglich, dass an allen Behält-nissen jeweils unterschiedliche Markierungen angebracht werden.

Diese Markierungseinrichtung 4 weist eine Lasererzeugungseinheit 42 auf, welche einen Laserstrahl oder genauer ein Laserbündel erzeugt. Die Bezugszeichen 45 und 48 kennzeichnen Umlenkspiegel, welche das erzeugte Laserbündel in Richtung eines Austrittselements 44 lenken. Das Laserbündel tritt durch das Austrittselement 44 aus und gelangt auf die Behältnisse 10, um sie so zu markieren.

Das Bezugszeichen 45 kennzeichnet ein erstes Umlenkelement wie einen Umlenkspiegel zum Umlenken des Laserbündels. Das Bezugszeichen 47 kennzeichnet eine Antriebseinrichtung wie einen Antriebsmotor, der zum Bewegen des Umlenkelements 45 dient.

Das Bezugszeichen 48 kennzeichnet ein zweites Umlenkelement wie einen Umlenkspiegel zum Umlenken des Laserbündels. Das Bezugszeichen 49 kennzeichnet eine zweite Antriebs-einrichtung wie einen Antriebsmotor, der zum Bewegen des Umlenkelements 48.

Das Bezugszeichen 6 kennzeichnet eine Inspektionseinrichtung zum Inspizieren des Austrittselements 44. Wie in Fig. 1 gezeigt ist es möglich, alternativ oder auch kumulativ eine Inspektionseinrichtung im Inneren des Gehäuses 46 der Markierungseinrichtung vorzusehen oder eine Inspektionseinrichtung 6 außerhalb des Gehäuses vorzusehen.

Das Gehäuse 46 dient weiterhin dem Zweck, die optischen Elemente im Inneren des Gehäuses vor Umwelteinflüssen zu schützen.

Das Bezugszeichen 62 kennzeichnet schematisch eine Auswerteeinrichtung, welche dazu geeignet und bestimmt ist, die von der oder den Inspektionseinrichtungen aufgenommenen Daten und insbesondere Bilder auszuwerten um auf diese Weise auf Verschmutzungen oder Beschädigungen des Austrittselements 44 zu schließen.

Das Bezugszeichen 64 kennzeichnet schematisch eine Reinigungseinrichtung, welche zum Reinigen des Austrittselements bzw. eine Außenoberfläche des Austrittselements 44 dient.

Das Bezugszeichen 66 kennzeichnet schematisch eine Maßnahmenauslöseeinrichtung. Diese löst in Reaktion auf von ein von der Auswerteeinrichtung 62 ausgegebenes Signal oder einen Wert eine Maßnahme zum Beheben einer festgestellten Anomalie des Austrittselements 44 aus. So kann beispielsweise ein Reinigungsvorgang ausgelöst oder angewiesen werden. Auch kann ein Maschinenbediener angewiesen werden, das Austrittselement auszuwechseln.

Das Bezugszeichen 12 kennzeichnet eine weitere Inspektionseinrichtung, welche dazu dient, die an den Behältnissen durch die Markierungseinrichtung 4 angebrachten Markierungen zu überprüfen.

Daneben ist bevorzugt eine Ausschleuseeinrichtung zum Ausschleusen von Behältnissen mit als fehlerhaft erkannten Markierungen vorgesehen.

Es wird darauf hingewiesen, dass sämtliche Merkmale, welche unter Bezugnahme auf das Verfahren beschrieben wurden, in entsprechender Weise auch für die Vorrichtung offenbart sind, was insbesondere bedeutet, dass die entsprechende Vorrichtung Einrichtungen aufweist, welche zur Durchführung der jeweiligen Verfahren geeignet und bestimmt sind. Weiterhin sind auch Merkmale, welche unter Bezugnahme auf die Vorrichtung beschrieben wurden entsprechend für das oder die Verfahren anwendbar. Dies bedeutet, dass die Verfahren unter Verwendung der entsprechenden Vorrichtungsmerkmale ausgeführt werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (1) zum Markieren von Objekten (10) und insbesondere von Behältnissen, Behältnisverschlüssen oder Etiketten (10) mit einer Transporteinrichtung (2), welche die Objekte (10) entlang eines vorgegebenen Transportpfads (P) transportiert und mit einer Markierungseinrichtung (4) welche dazu geeignet und bestimmt ist, die Objekte (10) mit einer Markierung zu versehen, wobei die Markierungseinrichtung (4) eine Lasererzeugungseinheit (42) zur Erzeugung eines Laserbündels aufweist sowie ein Austrittselement (44), über welches das Laserbündel aus der Markierungseinrichtung austritt,
**dadurch gekennzeichnet, dass**
die Vorrichtung eine Inspektionseinrichtung aufweist, welche dazu geeignet und bestimmt ist, das Austrittselement (44) zu inspizieren.

2. Vorrichtung (1) nach Anspruch 1,
**dadurch gekennzeichnet, dass**
die Inspektionseinrichtung (6) dazu geeignet und bestimmt ist, eine Anomalie des Austrittselements (44) zu erfassen.

3. Vorrichtung (1) nach dem vorangegangenen Ansprüche,
**dadurch gekennzeichnet, dass**
die Anomalie aus einer Gruppe von Anomalien ausgewählt ist, welche Verschmutzungen des Austrittselements, Beschädigungen und Fehler des Austrittselements enthält.

4. Vorrichtung (1) nach wenigstens einem der vorangegangenen Ansprüche 2 - 3,
**dadurch gekennzeichnet, dass**
die Inspektionseinrichtung (6) dazu geeignet und bestimmt ist, die Anomalie des Austrittselements berührungslos zu erfassen.

5. Vorrichtung (1) nach wenigstens einem der vorangegangenen Ansprüche 2 - 3,
**dadurch gekennzeichnet, dass**
die Inspektionseinrichtung (6) dazu geeignet und bestimmt ist wenigstens ein Signal auszugeben, welches für die Anomalie des Austrittselements charakteristisch ist.

6. Vorrichtung (1) nach wenigstens einem der vorangegangenen Ansprüche 2 - 3,
**dadurch gekennzeichnet, dass**
die Inspektionseinrichtung (6) wenigstens eine Bildaufnahmeeinrichtung aufweist, welche dazu geeignet und bestimmt ist, wenigstens ein Bild wenigstens eines Abschnitts des Austrittselements aufzunehmen.

7. Vorrichtung (1) nach wenigstens einem der vorangegangenen Ansprüche 2 - 3,
**dadurch gekennzeichnet, dass**
die Vorrichtung (1) eine Auswerteeinrichtung aufweist, welche dazu geeignet und bestimmt ist, von der Inspektionseinrichtung aufgenommene Messdaten und/oder Bilder, welche für das Austrittselement charakteristisch sind auszuwerten und wenigstens einen Wert auszugeben, welcher für ein Ergebnis dieser Auswertung charakteristisch ist.

8. Vorrichtung (1) nach dem vorangegangenen Anspruch,
**dadurch gekennzeichnet, dass**
die Auswerteeinrichtung dazu geeignet und bestimmt ist die Auswertung unter Verwendung einer künstlichen Intelligenz (KI) durchzuführen.

9. Vorrichtung (1) nach wenigstens einem der vorangegangenen Ansprüche 2 - 3, **dadurch gekennzeichnet, dass**
die Lasererzeugungseinheit aus einer Gruppe von Lasererzeugungseinheiten ausgewählt ist, welche CO2 Laser, Nd:Yag Laser, Faser laser, UV Laser, grüner Laser oder Ulrapulse Laser oder eine Kombination aus diesen enthält.

10. Vorrichtung (1) nach wenigstens einem der vorangegangenen Ansprüche 2 - 3, **dadurch gekennzeichnet, dass**
das Austrittselement aus einer Gruppe von Austrittselementen ausgewählt ist, welche Linsen, Austrittsfenster, Spiegel und Prismen enthält.

11. Vorrichtung (1) nach wenigstens einem der vorangegangenen Ansprüche 2 - 3,
**dadurch gekennzeichnet, dass**
die Vorrichtung eine Maßnahmenauslöseeinrichtung aufweist, welche in Reaktion auf die Feststellung einer Anomalie des Austrittselements ein Maßnahme auslöst, wobei bevorzugt diese Maßnahme aus einer Gruppe von Maßnahmen ausgewählt ist, welche die Aufforderung an einen Nutzer zum Reinigen des Austrittselements, eine automatisierte Reinigung des Austrittselements, die Aufforderung an einen Nutzer zum Wechseln des Austrittselements, einen automatisierten Wechsel des Austrittselements, die Ausgabe eines Warnhinweises an den Benutzer, die Anweisung zum Ändern wenigstens eines Parameters der Markierungseinheit, die Änderung wenigstens eines Parameters der Markierungseinheit und dergleichen enthält.

12. Vorrichtung (1) nach wenigstens einem der vorangegangenen Ansprüche 2 - 3,
**dadurch gekennzeichnet, dass**
die Vorrichtung (1) Reinigungseinrichtung zum automatischen Reinigen des Austrittselements und/oder eine Wechseleinrichtung zum automatischen Wechseln des Austrittselements aufweist.

13. Vorrichtung (1) nach wenigstens einem der vorangegangenen Ansprüche 2 - 3,
**dadurch gekennzeichnet, dass**
die Markierungseinrichtung (4) ein Gehäuse (46) aufweist in welcher die Lasererzeugungseinheit angeordnet ist und an der das Austrittselement (44) angeordnet ist, wobei bevorzugt die Inspektionseinrichtung wenigstens eine in diesem Gehäuse angeordnete Sensoreinrichtung aufweist oder die Inspektionseinrichtung wenigstens eine außerhalb des Gehäuses angeordnete Bildaufnahmeeinrichtung aufweist.

14. Markierungseinrichtung zum Markieren von Objekten und insbesondere von Behältnissen, Behältnisverschlüssen oder Etiketten mit einem Gehäuse (46) und einer innerhalb des Gehäuses angeordneten Lasererzeugungseinheit (42) sowie einem Austrittselement (44) über welches ein von der Lasererzeugungseinheit (42) erzeugtes Laserbündel aus der Markierungseinrichtung austritt,
**dadurch gekennzeichnet, dass**
eine Inspektionseinrichtung vorgesehen ist, welche dazu geeignet und bestimmt ist, das Austrittselement (44) zu inspizieren.

15. Verfahren zum Markieren von Objekten (10) und insbesondere von Behältnissen (10) wobei eine Transporteinrichtung die Objekte (10) entlang eines vorgegebenen Transportpfads (P) transportiert und eine Markierungseinrichtung (4) die Objekte (10) mit einer Markierung versieht, wobei die Markierungseinrichtung (4) eine Lasererzeugungseinheit (42) aufweist, welche ein Laserbündel erzeugt sowie ein Austrittselement (44), über welches das Laserbündel aus der Markierungseinrichtung austritt, **dadurch gekennzeichnet, dass**
die Vorrichtung eine Inspektionseinrichtung aufweist, welche das Austrittselement (44) wenigstens zeitweise inspiziert.
